Europäisches Patentamt

European Patent Office

Office européen des brevets

(11) Veröffentlichungsnummer: **0 482 313 A1**

# (12) EUROPÄISCHE PATENTANMELDUNG

(21) Anmeldenummer: **91113974.9**

(22) Anmeldetag: **21.08.91**

(51) Int. Cl.5: **A01G 27/00**

(30) Priorität: **09.10.90 DE 4031924**

(43) Veröffentlichungstag der Anmeldung:
**29.04.92 Patentblatt 92/18**

(84) Benannte Vertragsstaaten:
**DE DK ES FR NL**

(71) Anmelder: **Steverding, Franz**
**Barloer Strasse 51**
**W-4292 Rhede(DE)**

(72) Erfinder: **Steverding, Franz**
**Barloer Strasse 51**
**W-4292 Rhede(DE)**

(74) Vertreter: **Habbel, Hans-Georg, Dipl.-Ing.**
**Postfach 3429 Am Kanonengraben 11**
**W-4400 Münster(DE)**

(54) **Kulturverfahren für Topfpflanzen.**

(57) Die Erfindung betrifft ein Kulturverfahren für Pflanzen (2), die in Gärtnereien od. dgl. in Töpfen (1) großgezogen oder gehalten werden, bei dem die Pflanzen (2) über eine Bewässerungsanlage (8) gemeinsam bewässert werden und jeder Pflanze (2) das Wasser separat zugeführt wird, wobei der Wasseranteil, der bei der Bewässerung nicht von einer Pflanze oder vom Boden (3) aufgenommen wird, von einem um jede Pflanze angeordneten wasserundurchlässigen Behälter (4) aufgefangen sowie von einem saugfähigen Material (5) der Pflanze je nach Bedarf wieder zur Verfügung gestellt wird sowie eine Vorrichtung zur Durchführung dieses Kulturverfahrens.

FIG. 1

EP 0 482 313 A1

Die Erfindung betrifft ein Kulturverfahren für Topfpflanzen in Gärtnerei-Großbetrieben gemäß dem Oberbegriff des Hauptanspruches.

Es sind viele Verfahren bekannt, die zur Bewässerung und Kultivierung von Topfpflanzen geeignet sind. Generell wird zwischen offenen und geschlossenen Bewässerungsverfahren unterschieden. Bei den offenen Bewässerungsverfahren werden die Topfpflanzen bewässert, und der Wasseranteil, der nicht von der Pflanze aufgenommen oder vom Boden gehalten wird, versickert im Erdreich. Diese Art der Bewässerung hat den Nachteil, daß mit dem versickernden Wasser auch Dünger und sonstige dem Wasser beigemengte Mittel mit in das Erdreich und von da in das Grundwasser gelangen. Dies führt insbesondere bei großen Gärtnereibetrieben zu einer hohen Grundwasserbelastung. Der Eintrag von Düngemitteln, beispielsweise von Nitrat, ist besonders bei Azaleen- und Ericaceenkulturen hoch.

Es ist auch möglich, das überschüssige Wasser aufzufangen und zu entsorgen, wofür allerdings ein hoher Kostenaufwand nötig ist. Nachteilig bei der Bewässerung und Kultivierung mit einem offenen System ist auch, daß das überschüssige, von den Pflanzen nicht aufgenommene Wasser mit dem darin enthaltenen Dünger verlorengeht. Daher ist der Wasser- und Düngemittelverbrauch ca. 60 % höher als bei einem bisher üblichen geschlossenen System.

Um die genannten Nachteile des offenen Bewässerungsverfahrens zu vermeiden, kann ein geschlossenes Bewässerungsverfahren benutzt werden, bei dem sich das Wasser zur Bewässerung in einem Kreislauf befindet. Der nicht von der Pflanze oder vom Boden aufgenommene Wasseranteil wird durch geeignete Vorrichtungen aufgefangen und wieder zur Bewässerung verwandt, wodurch eine Einwaschung von Nitrat od. dgl. in den Boden und das Grundwasser vermieden wird. Das geschlossene System hat jedoch den entscheidenden Nachteil, daß sich Krankheitserreger schnell im gesamten Pflanzenbestand verteilen können. Es reicht z. B. eine kranke Pflanze aus, um den gesamten Bestand tausender Pflanzen zu infizieren. Das Bewässerungswasser nimmt in einem solchen Fall bei seinem Weg durch den Boden der kranken Pflanze Krankheitserreger auf; das infizierte Wasser wird später zur erneuten Bewässerung benutzt und steckt weitere Pflanzen an.

Aus der EP-0 201 426 A1 ist ein Kulturverfahren bekannt, bei dem die Pflanzen über eine Bewässerungsanlage gemeinsam bewässert werden und jeder Pflanze das Wasser separat zugeführt wird. Eine völlige Separation der einzelnen Pflanzen ist hier jedoch nicht gegeben, da jeweils mehrere Pflanzen von einem abdichtenden Material umgeben sind, so daß eine Auswaschung von Krankheitserregern aus einer Pflanze zu einer Krankheitsübertragung auf die anderen Pflanzen führen kann.

Aus dem DE-GM 88 14 990 ist weiterhin eine Vorrichtung zur Bewässerung von Pflanzen beschrieben, bei der die Pflanzen u. a. einzeln bewässert werden. Die darin beschriebene Vorrichtung weist jedoch den Nachteil auf, daß die Bewässerungsgaben sehr genau dosiert werden müssen. Bei zu starker Bewässerung stehen die Pflanzen zu feucht, und bei zu geringer Bewässerung erhalten die Pflanzen zu wenig Wasser. Die Bewässerungsgaben werden also nicht gepuffert, d. h. das von der Pflanze bzw. dem Boden nicht aufgenommene Wasser wird von der hier beschriebenen Vorrichtung der Pflanze nicht je nach Bedarf wieder zur Verfügung gestellt. Aufgrund des hohen Bedienungsaufwandes ist diese Vorrichtung für große Gärtnereien nicht geeignet.

Der Erfindung liegt die Aufgabe zugrunde, ein Bewässerungsverfahren für Topfpflanzen zu entwickeln, das die Vorteile der offenen und geschlossenen Bewässerungsverfahren zusammenfaßt, nämlich eine Krankheitsübertragung der Pflanzen untereinander zu verhindern und trotzdem eine gemeinsame Bewässerung zu ermöglichen, bei der das von den Pflanzen nicht aufgesogene Wasser nicht in den Boden und das Grundwasser gelangt oder unter hohem Kostenaufwand entsorgt werden muß. Dabei soll das neue Bewässerungsverfahren ohne großen finanziellen Aufwand zu installieren und zu betreiben sein, so daß es für Gärtnereibetriebe wirtschaftlich und einfach zu betreiben ist. Weiterhin sollen die Wasser- und Düngegaben weiter optimiert werden, so daß ein noch besserer Wirkungsgrad zwischen den Bewässerungsgaben und dem von der Pflanze aufgenommenen Wasser als bei bisher bekannten Bewässerungsverfahren erreicht wird.

Diese der Erfindung zugrundeliegende Aufgabe wird durch das Kennzeichen des Hauptanspruches 1 gelöst.

Die Erfindung geht insbesondere von der Idee aus, ein Kulturverfahren für Topfpflanzen zu entwickeln, bei dem jeder Pflanze individuell Wasser zugeführt wird, beispielsweise mit einer Tropfenbewässerung und welches weiterhin eine Pufferung der Bewässerungsgaben ermöglicht, bei der das durch den Boden gesickerte Wasser in einem Reservoir aufgefangen und über ein saugfähiges Material, wie z. B. Vlies oder Filz, zugeführt wird.

Dieses vorteilhafte Kulturverfahren kann mit verblüffend einfachen Hilfsmitteln durchgeführt werden. So kann die Pflanze beispielsweise in einen Tontopf gepflanzt werden, der wasserdurchlässig ist, der wiederum in einen wasserundurchlässigen Behälter gesetzt wird, und zwischen den Behälter und den Pflanzentopf wird ein saugfähiges Material, wie Vlies, Filz, Baumwollmatten etc., gelegt.

Wenn nun die Pflanze beispielsweise mittels Tröpfchenbewässerung bewässert wird und die Wassergabe so hoch ist, daß Wasser unten aus dem Pflanzentopf heraussickert, wird das herausgesickerte Wasser von dem saugfähigen Stoff aufgenommen und der Pflanze wieder zugeführt. Das herausgesickerte Wasser steigt aufgrund der kapillaren Kräfte in dem saugfähigen Stoff auf. Wenn der Boden innerhalb des Pflanzentopfes nach der Bewässerung beginnt, trocken zu werden, d. h. wenn das Matrixpotential des Bodens steigt, entstehen Kräfte, die das im saugfähigen Stoff aufgestiegene Wasser durch den porösen Pflanzentopf hindurch in den Boden saugen. Dadurch steht der Pflanze, auch außerhalb der Bewässerungszeiten, Wasser zur Verfügung, d. h. der Anmeldungsgegenstand puffert die Bewässerungsgaben, indem er das bei der gemeinsamen Bewässerung vieler Pflanzen evtl. einer Pflanze zuviel zugeführte Wasser auffängt und bei erneutem Wasserbedarf der Pflanze wieder zuführt. Insbesondere bei großen Pflanzenkulturen ist ein derartiges Kulturverfahren vorteilhaft, wo eine individuelle Kontrolle der Pflanzen nicht durchgeführt werden kann. Mit dem beschriebenen Verfahren werden nicht nur optimale Wuchsbedingungen für die Pflanzen erreicht, sondern auch eine ausgezeichnete Ausnutzung des Wassers und der darin enthaltenen Düngerstoffe.

Trotz einer gemeinsamen Bewässerung aller Pflanzen, sind die Pflanzen untereinander isoliert, was bei Pflanzenkulturen in Gärtnereibetrieben ein ganz wichtiger Aspekt ist, da in solchen Betrieben tausende Pflanzen gleicher Art dicht beieinander stehen und somit die Ansteckungsgefahr groß ist. Da das durch den Boden gesickerte Wasser wieder zur gleichen Pflanze zurückgeführt wird und dieses Wasser nicht in Kontakt mit anderen Pflanzen gerät, können Krankheitserreger nicht auf weitere Pflanzen übertragen werden.

Vorteilhafte Ausgestaltungen einer Vorrichtung zur Durchführung des Verfahrens nach Anspruch 1 sind in den Unteransprüchen erläutert.

Insbesondere wird die Verwendung einer Wasserleitplatte vorgeschlagen, so daß der Anteil des Niederschlagswassers, der nicht direkt von der Pflanze oder vom Pflanzensubstrat aufgenommen wird, aus dem Bereich des Pflanzentopfes und des Behälters geleitet wird und es nicht zu einem Verdünnen der im unteren Teil des Behälters befindlichen Nährstofflösung und Überlaufen derselben kommen kann.

Ausführungsbeispiele der Erfindung werden nachfolgend anhand der Zeichnungen erläutert. Dabei zeigt

Fig. 1    eine teilweise geschnittene Gesamtansicht,

Fig. 2    schaubildlich einen Schnitt durch eine Ausführungsform der Erfindung und

Fig. 3    in einer Teildarstellung ebenfalls im Schnitt eine weitere vorteilhafte Ausführungsform.

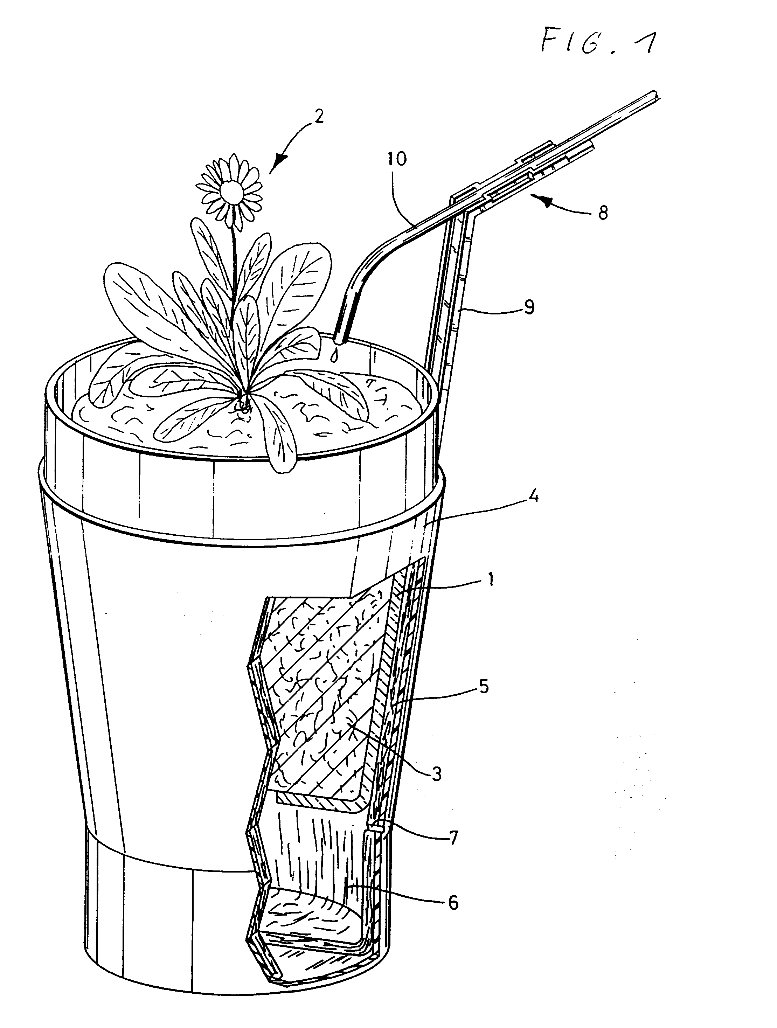

Bezugnehmend auf Fig. 1 nimmt ein Pflanzentopf 1 eine Pflanze 2 und Bodenmaterial 3 auf. Der Pflanzentopf 1 besteht aus einem wasserdurchlässigen Werkstoff, beispielsweise Ton oder Papier. Der Pflanzentopf 1 befindet sich in einem Behälter 4, der aus wasserundurchlässigem Material besteht, vorzugsweise Kunststoff. Die Innenwandungen des Behälters 4 sind mit einem saugfähigen, wasseraufnehmenden Material, z. B. einem Vlies 5, ausgekleidet, wobei hier Stoffe vorteilhaft sind, die wasserresistent sind und daher eine hohe Lebensdauer aufweisen, wie beispielsweise Vliesstoffe aus Kunststoff oder aber andere in Gärtnereien benutzte Materialien, wie z. B. Baumwollmatten. Die in der Zeichnung dargestellte Ausführungsart mit einem am Behälter 4 befestigten Vlies 5 hat den Vorteil, daß ein Wechsel des Pflanzentopfes 1 besonders einfach ist. Wenn die Pflanze 2 im Pflanzentopf 1 groß genug ist, braucht sie nur mitsamt dem Pflanzentopf 1 herausgenommen zu werden und es kann die nächste Pflanze samt Pflanzentopf 1 in den Behälter 4 eingesetzt werden. Es ist aber auch denkbar, daß das Vlies 5 lediglich in den Behälter 4 gelegt wird oder daß das Vlies am Pflanzentopf 1 befestigt wird oder daß der Pflanzentopf 1 selbst aus saugfähigem Stoff, wie Papier oder Filz, besteht.

Der in der Zeichnung gezeigte Behälter 4 ist höher als der Pflanzentopf 1, so daß ein Hohlraum zwischen dem Boden des Pflanzentopfes 1 und dem Boden des Behälters 4 gebildet wird, der als Reservoir 6 für das durch das Bodenmaterial 3 gesickerte Wasser dient. Durch das Reservoir 6 wird verhindert, daß der Pflanzentopf 1 bei zu starker Bewässerung im Wasser steht, was zu ungünstigen Bedingungen für die Pflanze führt, sondern sich das Wasser im Reservoir 6 sammelt und von da über das Vlies der Pflanze wieder zugeführt wird. Dabei handelt es sich also um einen Vorgang, der über die Verdunstungsleistung der Pflanze von der Pflanze selbst gesteuert wird und optimale Wachstumsbedingungen ermöglicht. Das Vlies 5 schützt die Pflanze in Verbindung mit dem Behälter 4 sowohl vor Austrocknung als auch vor Überhitzung.

Bei der in Fig. 1 gezeigten Ausführungsart ist im Behälter 4 ein Überlauf 7 vorgesehen, durch den Wasser abfließen kann, wenn sich zuviel Wasser im Reservoir 6 angesammelt hat. Der Überlauf 7 ist als Schutz der Pflanze gegen ein Zuviel an Wasser bei außergewöhnlichen Ereignissen vorgesehen, wie es z. B. ein besonders starker Regen sein kann oder eine krasse Fehlbedienung der Bewässerungsanlage. Im normalen Betrieb wird der Überlauf 7 nicht benötigt.

Im gezeigten Ausführungsbeispiel wird die Pflanze 2 mittels einer Tropfenbewässerungsanlage 8 bewässert, wobei der Halter 9, der einen Schlauch 10 trägt, am Behälter 4 befestigt ist. Diese Anordnung hat den Vorteil, daß der Pflanzentopf 1 mitsamt der Pflanze 2 schnell aus der Bewässerungsvorrichtung genommen werden kann.

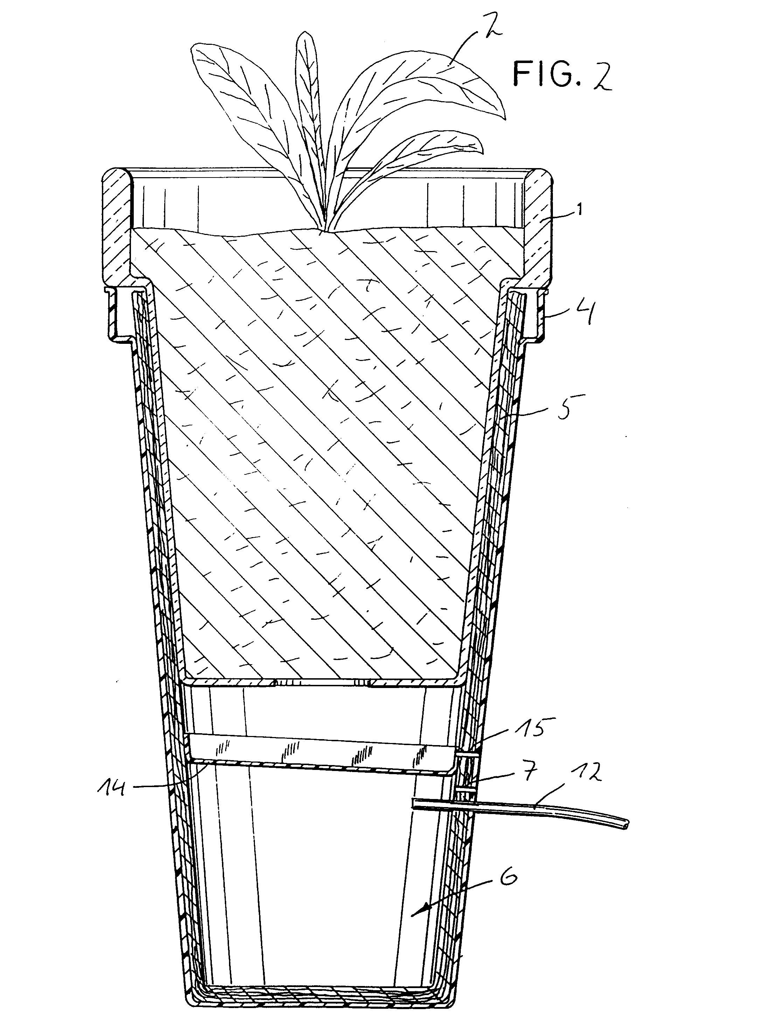

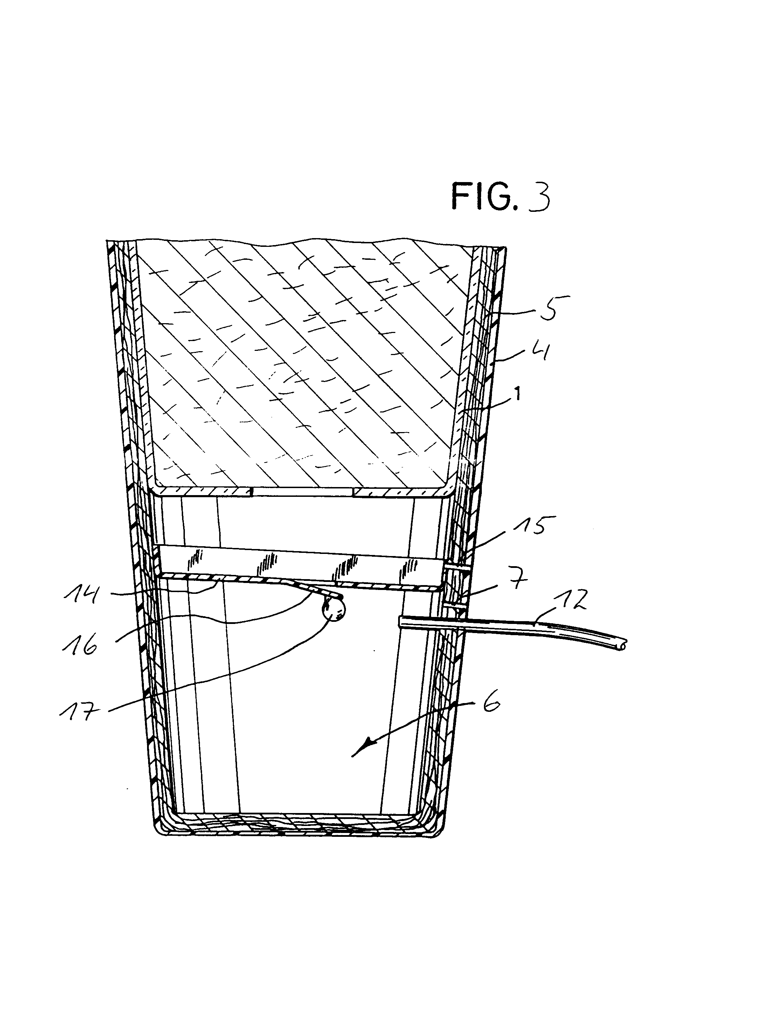

Bezugnehmend auf Fig. 2 und 3 ist wiederum mit 1 der Pflanzentopf bezeichnet, in dem eine Pflanze 2 eingepflanzt ist und der in dem wasserundurchlässigen Behälter 4 angeordnet ist. Der Behälter 4 ist an seiner Innenseite mit dem saugfähigen Stoff 5 ausgekleidet.

Im Gegensatz zu Fig. 1 mündet eine Bewässerungszuleitung 12 in den Behälter 4 und gibt das Wasser und darin enthaltene Zusatzstoffe, d. h. also eine Nährlösung, an das saugfähige Material 5 ab. In den Figuren dargestellt ist auch die Möglichkeit, daß das aus der Bewässerungszuleitung 12 austretende Wasser zunächst auf den Boden des Behälters 4 gelangt, um da von dem saugfähigen Material 5 aufgenommen zu werden und zur Pflanze 2 zu gelangen.

Unterhalb des Pflanzentopfes 1 ist innerhalb des Reservoirs 6 eine Wasserleitplatte 14 angeordnet, die die Verbindung des oberen Bereiches des Behälters 4 mit dessen unterem Bereich über das saugfähige Material 5 nicht unterbricht. Diese Wasserleitplatte 14 hat die Aufgabe, den Wasseranteil, der bei einem Niederschlag nicht von der Pflanze oder dem Pflanzensubstrat direkt aufgenomen wird, durch eine oder mehrere Öffnungen 15 aus dem Behälter 4 zu leiten und so eine Verdünnung der Nährlösung auszuschließen. Es ist vorteilhaft, wenn die Wasserleitplatte 14 in Richtung der Öffnungen 15 geneigt ist, um das durchgesickerte Niederschlagswasser direkt abzuführen; es ist jedoch auch möglich, die Wasserleitplatte 14 waagerecht anzuordnen, so daß erst nach einem Überstauen das überschüssige Niederschlagswasser abgegeben wird. Es ist vorteilhaft, wenn die Ränder der Wasserleitplatte 14 nach oben gebogen sind, da die Wasserleitplatte 14 so einen sicheren Halt an dem saugfähigen Material 5 hat. Wichtig ist auch, daß das saugfähige Material 5 nicht zu stark zusammengedrückt wird, so daß dessen Wasserleitfähigkeit erhalten bleibt.

In einem weiteren Ausführungsbeispiel, das in Fig. 3 gezeigt wird, ist die Wasserleitplatte 14 mit einem Rückschlagventil 16, an dem ein Schwimmer 17 angeordnet ist, ausgestattet. Mit dieser Ausführungsform wird das Niederschlagswasser, was zunächst durch den Pflanzentopf 1 gesickert ist, im Reservoir 6 aufgenommen. Wenn das Reservoir 6 gefüllt ist, schließt das Rückschlagventil 16 die Wasserleitplatte 14 und daraufhin wird der Wasseranteil, der weiterhin aus dem Pflanzentopf 1 austritt, aus dem Behälter 4 geleitet. Dies hat den Vorteil, daß einerseits ein Teil des Niederschlagswassers zur Bewässerung der Pflanze benutzt wird, daß aber andererseits ein Vernässen der Pflanze und eine Belastung der Umwelt ausgeschlossen wird. Hierdurch tritt eine kalkulierbare Verdünnung der Nährlösung ein, aber es wird Bewässerungswasser gespart.

Um auszuschließen, daß die Wurzeln aus dem Pflanzentopf 1 nach unten wachsen, ist es wichtig, die Wasserleitplatte 14 in einem Abstand von mindestens 1 cm zum Pflanzentopf 1 anzuordnen, so daß dadurch der Wasserspiegel von der Unterseite des Topfes 1 ferngehalten wird.

Die seitliche Zuführung der Bewässerungszuleitung 12, die vorteilhafterweise aus an sich bekannten Kapillarschläuchen besteht, hat den Vorteil, daß der Pflanzentopf 1 schnell und problemlos aus dem Behälter 4 entnommen werden kann. Keine Bewässerungszuleitung od. dgl. befindet sich über dem Pflanzentopf 1, die beim Herausnehmen der Pflanze hinderlich wäre oder beschädigt werden könnte.

Die Außenseite des Topfes 1 kann aus wärmetechnischen Gründen hell oder reflektierend ausgebildet sein.

**Patentansprüche**

1. Kulturverfahren für Pflanzen, die in Gärtnereien od. dgl. in Töpfen großgezogen oder gehalten werden, bei dem die Pflanzen über eine Bewässerungsanlage gemeinsam bewässert werden und jeder Pflanze das Wasser separat zugeführt wird, dadurch gekennzeichnet, daß der Wasseranteil, der bei der Bewässerung nicht von einer Pflanze oder vom Boden aufgenommen wird, von einem um jede Pflanze (2) angeordneten wasserundurchlässigen Behälter (4) aufgefangen sowie von einem saugfähigen Material (5) der Pflanze (2) je nach Bedarf wieder zur Verfügung gestellt wird.

2. Vorrichtung zur Durchführung eines Kulturverfahrens gemäß Anspruch 1, dadurch gekennzeichnet, daß in an sich bekannter Weise ein wasserdurchlässiger Pflanzentopf (1) in einem wasserundurchlässigen Behälter (4) angeordnet ist und daß sich zumindest teilweise zwischen dem Pflanzentopf (1) und dem Behälter (4) ein saugfähiges Material (5) befindet.

3. Vorrichtung nach Anspruch 2, dadurch gekennzeichnet, daß in dem Behälter (4) unterhalb des Pflanzentopfes (1) ein Wasserreservoir (6) ausgebildet ist.

**4.** Vorrichtung nach Anspruch 2 oder 3, dadurch gekennzeichnet, daß das saugfähige Material (5) an der Innenseite des Behälters (4) befestigt ist.

**5.** Vorrichtung nach einem der vorhergehenden Ansprüche, dadurch gekennzeichnet, daß im Behälter (4) ein Überlauf (7) vorgesehen ist.

**6.** Vorrichtung nach einem der vorhergehenden Ansprüche, dadurch gekennzeichnet, daß zur Bewässerung der Topfpflanzen eine Tropfenbewässerung vorgesehen ist.

**7.** Vorrichtung nach einem der vorhergehenden Ansprüche, dadurch gekennzeichnet, daß unterhalb des Pflanzentopfes (1) innerhalb des Wasserreservoirs (6) eine Wasserleitplatte (14) angeordnet ist, die unter Zwischenschaltung des saugfähigen Materials (5) eng an den Innenseiten des Behälters (4) anliegt, und daß die Behälterwandung oberhalb der Wasserleitplatte (14) mit einer oder mehreren Öffnungen (15) versehen ist.

**8.** Vorrichtung nach Anspruch 7, dadurch gekennzeichnet, daß die Wasserleitplatte (14) mit einem Rückschlagventil (16) versehen ist.

**9.** Vorrichtung nach einem der vorhergehenden Ansprüche, dadurch gekennzeichnet, daß die Wasserzufuhr mittels an sich bekannten Kapillarschläuchen erfolgt.

**10.** Vorrichtung nach einem der vorhergehenden Ansprüche, dadurch gekennzeichnet, daß eine Bohrung zur Aufnahme der Bewässerungszuleitung (12) in der Wandung vom Behälter (4) unterhalb der Wasserleitplatte (14) angeordnet ist.

**11.** Vorrichtung nach einem der vorhergehenden Ansprüche, dadurch gekennzeichnet, daß die Wandung des Behälters (4) unterhalb der Wasserleitplatte (14) mit einer oder mehreren Ablaufbohrungen (7) versehen ist.

**12.** Vorrichtung nach einem der vorhergehenden Ansprüche, dadurch gekennzeichnet, daß die Wasserleitplatte (14) an ihren Rändern hochgewölbt ist.

**13.** Vorrichtung nach einem der vorhergehenden Ansprüche, dadurch gekennzeichnet, daß die Wasserleitplatte (14) in Richtung der oder den Öffnungen (15) geneigt ist.

**14.** Vorrichtung nach einem oder mehreren der vorhergehenden Ansprüche, dadurch gekennzeichnet, daß die Außenseite des Behälters (4) aus thermischen Gründen eine helle und/oder reflektierende Oberfläche hat.

**15.** Vorrichtung nach einem der vorhergehenden Ansprüche, dadurch gekennzeichnet, daß die Wasserleitplatte (14) in einem Abstand von mindestens 1 cm unterhalb des Pflanzentopfes (1) angebracht ist.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 095 083   (FAH AH NGAU)<br>* Seite 1, Zeilen 69-123; Abbildung 1 * | 1,5,10,11 | A 01 G 27/00 |
| Y | | 9 | |
| A | | 2,3,7,8 | |
| | – – – | | |
| X | DE-U-8 807 199   (BEBEG BADISCHE EISEN- UND BLECHWARENFABRIK GMBH)<br>* Seite 7, Zeile 26 - Seite 8, Zeile 10; Seite 9, Zeilen 1-19; Abbildung * | 1 | |
| A | | 2,3,10 | |
| | – – – | | |
| A | DE-U-8 900 026   (G. FRIEDERICHS)<br>* Seite 2, Zeilen 8-32; Abbildung * | 7,12 | |
| | – – – | | |
| D,Y | EP-A-0 201 426   (ISOVER SAINT-GOBAIN)<br>* Spalte 11, Zeile 5 - Spalte 12, Zeile 4; Abbildungen 1,2 * | 9 | |
| D,A | | 1,6 | |
| | – – – – – | | |

**RECHERCHIERTE SACHGEBIETE (Int. Cl.5)**

A 01 G

Der vorliegende Recherchenbericht wurde für alle Patentansprüche erstellt

| Recherchenort | Abschlußdatum der Recherche | Prüfer |
|---|---|---|
| Berlin | 24 Januar 92 | MARTIN DEL RIO A |